## Europäisches Patentamt

## European Patent Office

## Office européen des brevets

(19)

(11) Veröffentlichungsnummer: **0 155 534**
**B1**

(12) **EUROPÄISCHE PATENTSCHRIFT**

(45) Veröffentlichungstag der Patentschrift:
**28.12.88**

(51) Int. Cl.⁴: **B 01 D 13/04,** A 61 M 1/16

(21) Anmeldenummer: **85101968.7**

(22) Anmeldetag: **22.02.85**

(54) **Dialysemembran aus Cellulose mit verbesserter Biokompatibilität.**

(30) Priorität: **20.03.84 DE 3410133**
**20.10.84 DE 3438531**

(43) Veröffentlichungstag der Anmeldung:
**25.09.85 Patentblatt 85/39**

(45) Bekanntmachung des Hinweises auf die Patenterteilung:
**28.12.88 Patentblatt 88/52**

(84) Benannte Vertragsstaaten:
**DE FR IT**

(56) Entgegenhaltungen:
**EP-A- 0 026 399**
**EP-A- 0 046 136**
**EP-A- 0 111 714**
**DE-A- 2 642 407**
**DE-C- 2 358 150**
**US-A- 2 593 540**
**US-A- 4 145 515**
**US-A- 4 280 970**

(73) Patentinhaber: **Akzo Patente GmbH,**
**Postfach 10 01 49 Kasinostrasse 19-23,**
**D-5600 Wuppertal-1 (DE)**

(72) Erfinder: **Pelger, Michael, Dr., Buschenburg 32,**
**D-5600 Wuppertal 22 (DE)**
Erfinder: **Schulze, Helmut, Dr., Am langensiepen 14,**
**D-5600 Wuppertal 1 (DE)**

ACTORUM AG

**Beschreibung**

Die Erfindung betrifft eine Dialysemembran für die Hämodialyse in Form von Flachfolien, Schlauchfolien oder Hohlfäden aus regenerierter Cellulose.

Dialysemembranen aus regenerierter Cellulose für die Hämodialyse in Form von Flachfolien, Schlauchfolien oder Hohlfäden sind bereits seit längerem bekannt und werden nach wie vor bevorzugt in künstlichen Nieren eingesetzt, obwohl sich manche Beschwerden verursachende Eigenschaften noch nicht beseitigen liessen.

So ist aus der DE-C-2 705 735 eine Dialysemembran für die Hämodialyse, mit verminderter thrombogener Wirkung aus Cellulose, mit daran chemisch gebundenen antithrombogenen Verbindungen bekannt, wobei die Dialysemembran aus zwei oder mehreren Schichten einer aus Cuoxamcelluloselösungen regenerierten Cellulose besteht, die jeweils aus getrennt gespeisten Schlitzen einer Spinndüse erhalten worden sind, wobei die auf der Blutseite angeordnete Celluloseschicht ganz oder teilweise eine modifizierte Cellulose ist, die antithrombogene Wirkstoffe chemisch gebunden enthält.

Es ist aber auch bereits schon in der DE-A-1 720 087 vorgeschlagen worden, dadurch, dass das Polymermaterial der Membran mit einem Alkylhalogenid umgesetzt und danach das erhaltene Material mit einem Alkalisalz einer antithrombogenen Verbindung mit kationischem Rest (z. B. Heparin oder eine Heparinoidverbindung) umgesetzt wird, die Gefahr der Gerinnung des Blutes zu verringern. Zu den möglichen Alkylhalogeniden werden dabei auch Halogenalkyldialkylamine gerechnet. Auch Cellulose, jedoch im wesentlichen Celluloseacetat, zählt zu den möglichen Polymeren.

Neben dem Umstand, dass Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung oder durch die vorgenannten besonderen Dialysemembranen weitgehend verhindert wird, tritt bei Dialysemembranen aus regenerierter Cellulose häufig ein weiteres Problem auf, das bisher noch nicht zufriedenstellend gelöst werden konnte, und zwar war festgestellt worden, dass bei der Behandlung eines Nierenkranken mit Dialysatoren mit Cellulose-Membranen in der ersten Zeit der Dialysebehandlung ein vorübergehender Leukozytenabfall stattfinden kann. Dieser Effekt wird als Leukopenie bezeichnet.

Leukopenie ist eine Erniedrigung der Leukozytenzahl (weisse Blutkörper) im Blutkreislauf. Die Zahl der weissen Blutkörper beim Menschen beträgt ca. 4000 bis 12000 Zellen/mm$^3$.

Die Leukopenie bei Dialyse ist am stärksten ausgeprägt 15 bis 20 Min. nach Beginn, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer Dialysator angeschlossen, tritt wieder Leukopenie im gleichen Ausmass ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne dass dadurch die anderen sehr erwünschten Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von eindringenden fremden Zellen (Bakterien u. a.) dient. Wenn Antikörper gegen den eindringenden Organismus vorhanden sind, kann Komplement durch den Komplex der Antikörper mit antigenen Strukturen der Fremdzellen aktiviert werden; es ist aber auch möglich, auf einem Alternativ-Weg durch besondere Oberflächenmerkmale der Fremdzelle das Komplement-System zu aktivieren. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten des Komplement-Systems werden Peptide freigesetzt, die Entzündungserscheinungen auslösen und gelegentlich auch unerwünschte pathologische Folgen für den Organismus haben können.

Es wird angenommen, dass die Aktivierung bei Hämodialysemembranen aus regenerierter Cellulose über den alternativen Weg erfolgt. Objektiv können diese Komplement-Aktivierungen unter anderem durch eine Bestimmung der Fragmente C3a und C5a festgestellt werden.

In diesem Zusammenhang wird auf folgende Arbeiten hingewiesen: D. E. Chenoweth et al., Kidney International Vol. 24, Seiten 764 ff, 1983, und D. E. Chenoweth, Asaio, Journal Vol. 7, Seiten 44 ff, 1984.

Obwohl die klinische Bedeutung der Komplement-Aktivierung noch nicht geklärt ist, ist man bestrebt, diese bei der Hämodialyse möglichst auszuschliessen. Es war deshalb Aufgabe der vorliegenden Erfindung, Hämodialysemembranen aus regenerierter Cellulose so weit zu modifizieren, dass die genannten Erscheinungen der Leukopenie und der Komplement-Aktivierung nicht mehr auftreten.

Gelöst wird diese Aufgabe durch Dialysemembranen entsprechend den Patentansprüchen der vorliegenden Erfindung.

Die erfindungsgemässe Dialysemembran in Form von Flachfolien, Schlauchfolien oder Hohlfäden aus regenerierter Cellulose zeichnet sich dadurch aus, dass mindestens an einer Membranoberfläche in organischen Lösungsmitteln lösliche, ausgenommen mit Isocyanat-Gruppen reagierende und Cellulose lösende Lösungsmittel, Isocyanatpräpolymere mit einem mittleren Molekulargewicht von 300 bis 50.000 chemisch gebunden und ein Reaktionsprodukt aus einer Hydroxy- und/oder Polyhydroxy-Verbindung und einer polyfunktionellen Isocyanat-Verbindung sind.

Beispiele für Lösungsmittel, die mit Isocyanat-Gruppen nicht reagieren und Cellulose auch nicht lösen, sind Methylenchlorid, Chloroform, Tetrahydrofuran, Dioxan, Dimethylformamid, Dimethylacetamid und Aceton. Die Lösungsmittel können als solche bei der Herstellung der erfindungsgemässen Membranen oder im Gemisch untereinander Verwendung finden, sofern auch das Gemisch die Forderung erfüllt, dass es Cellulose nicht löst. Es ist vorteilhaft, wenn das Lösungsmittel ein gutes Lösungsvermögen für die Isocyanatpräpolymeren bei Temperaturen unterhalb von 60 °C aufweist, insbesondere bei Raumtemperatur.

Isocyanatpräpolymere werden durch Umsetzung von H-aciden Verbindungen mit Isocyanat-Verbindungen erhalten, die mehrere Isocyanat-Gruppen enthalten, wobei das molare Verhältnis der H-aciden Verbindung zum Isocyanat geringer gewählt wird, als zum Umsatz aller Isocyanat-Gruppen erforderlich wäre, so dass freie $N=C=O$-Reste für die Addition des Präpolymeren an Cellulose zur Verfügung stehen.

Das Molekulargewicht ist eine Verhältniszahl der Masse eines Moleküls zur Atommasse des Kohlenstoffisotops 12. Es wird in manchen Fällen mit der Dimension «Dalton» angegeben.

Als Polyhydroxyverbindungen kommen dabei in Frage hydroxylgruppenhaltige Polyäther, wie Polyäthylenglykol, Polypropylenglykol und Polytetramethylenglykol; hydroxylgruppenhaltige Polyester, wie Polyäthylenadipat, Polypropylenadipat, Polybutylenadipat; hydroxylgruppenhaltige Polycarbonate, wie beispielsweise Polyhexandiolcarbonat. Es können aber auch natürlich vorkommende Polyhydroxyverbindungen wie beispielsweise Rizinusöl oder Derivate des Rizinusöls oder Monoglyceride der natürlich vorkommenden Fettsäuren und/oder deren Gemische für die Reaktion mit Di-, Tri- und/oder polyfunktionellen Isocyanatverbindungen herangezogen werden.

Beispiele für geeignete Isocyanatverbindungen sind: Diphenylmethandiisocyanate, Toluylendiisocyanate, Hexamethylendiisocyanate, Dicyclohexylmethandiisocyanate, Isophorondiisocyanate, Cyclohexyldiisocyanate, Triphenylmethantriisocyanate.

In einer Ausführungsform der Erfindung ist das Isocyanatpräpolymer ein Reaktionsprodukt eines Diisocyanates mit einem Fettalkohol mit 6 bis 30 C-Atomen.

In einer anderen Ausführungsform der Erfindung ist das Isocyanatpräpolymer ein Reaktionsprodukt eines Diisocyanates mit einem äthoxilierten Fettalkohol mit 6 bis 30 C-Atomen.

In einer weiteren Ausführungsform der Erfindung ist das Isocyanatpräpolymer ein Reaktionsprodukt eines Diisocyanates mit einer äthoxilierten Fettsäure mit 6 bis 30 C-Atomen. Vorzugsweise beträgt dabei der Äthoxilierungsgrad 5 bis 400.

Besonders bevorzugt werden Isocyanatpräpolymere, die Reaktionsprodukte eines Diisocyanates mit Polyhydroxy-Verbindungen sind. Zu deren Herstellung werden vorzugsweise als Polyhydroxy-Verbindungen Dioxy- und/oder Trioxy-Verbindungen eingesetzt.

Eine weitere Ausführungsform der Membranen ist dadurch gekennzeichnet, dass das Isocyanatpräpolymere ein Reaktionsprodukt ist aus einer zunächst durchgeführten Reaktion einer Hydroxy- und/oder Polyhydroxy-Verbindung mit einer polyfunktionellen Isocyanat-Verbindung und einer anschliessend durchgeführten Reaktion dieses Zwischenproduktes mit Hydrazin und/oder einem aliphatischen Diamin einer Kettenlänge von 2 bis 30 C-Atomen.

Die vorliegende Erfindung gestattet es, bei Dialysemembranen aus Cellulose, unabhängig von der jeweiligen Herstellung, die Leukopenie und die Komplementaktivierung in erheblichem Masse zu reduzieren. Wegen der günstigen Dialyseeigenschaften von Cellulose, die aus Cuoxamlösungen regeneriert ist, ist jedoch eine solche bevorzugt. Dabei soll das mittlere Molekulargewicht vorzugsweise 80.000 bis 150.000 betragen.

Die Erfindung betrifft auch ein Verfahren zur Herstellung der beanspruchten Dialysemembran. Es ist dadurch gekennzeichnet, dass man eine Dialysemembran in Form von Hohlfäden, Schlauchfolien oder Flachfolien aus regenerierter Cellulose mit einer Lösung eines Isocyanatpräpolymeren bei Temperaturen oberhalb 10 °C in einem organischen Lösungsmittel, welches mit dem gewählten Präpolymeren nicht reagiert und Cellulose nicht löst, und unterhalb der Siedetemperatur des Lösungsmittels zwischen 3 Minuten und 24 Stunden behandelt, den Überschuss an Präpolymer mit reinem Lösungsmittel auswäscht und das Lösungsmittel entfernt.

Die Behandlungszeit richtet sich nach dem Isocyanatpräpolymeren, der Konzentration in der Reaktionslösung und der Temperatur. Von aromatischen Isocyanaten abgeleitete Isocyanatpräpolymere reagieren normalerweise dabei schneller als von aliphatischen abgeleitete, so dass man insbesondere bei letzteren zur Abkürzung der Behandlungszeit Katalysatoren verwendet. Als hervorragend geeignet für die vorliegende Erfindung hat sich als Katalysator Eisen-III-acetylacetonat bewährt. Mit Hilfe des Katalysators gelingt es auch bei langsam reagierenden Isocyanaten, die Behandlungszeit der Membran auf eine Zeit von 5 Minuten bis 3 Stunden zu begrenzen.

Die Konzentration des Isocyanatpräpolymeren im Lösungsmittel beträgt vorzugsweise von 0,1 bis 20 Volumen-%.

Vorzugsweise werden Lösungen eingesetzt, bei denen die Konzentration des Isocyanatpräpolymeren im Lösungsmittel von 1,0 bis 10,0 Volumen-% beträgt.

Da die Dialysemembranen für die Hämodialyse eingesetzt werden sollen, ist es besonders wichtig, nach beendeter Behandlung das bzw. die Lösungsmittel zu entfernen. In bevorzugter Weise geschieht dieses dadurch, dass das Lösungsmittel dadurch entfernt wird, dass man mit einem leichter flüchtigen, Cellulose nicht lösendem, organischen Lösungsmittel das Lösungsmittel auswäscht und den verbleibenden Lösungsmittelrest verdampfen lässt.

Zur weiteren Erläuterung der Erfindung dienen die nachfolgenden Beispiele.

Vergleichsbeispiel A:

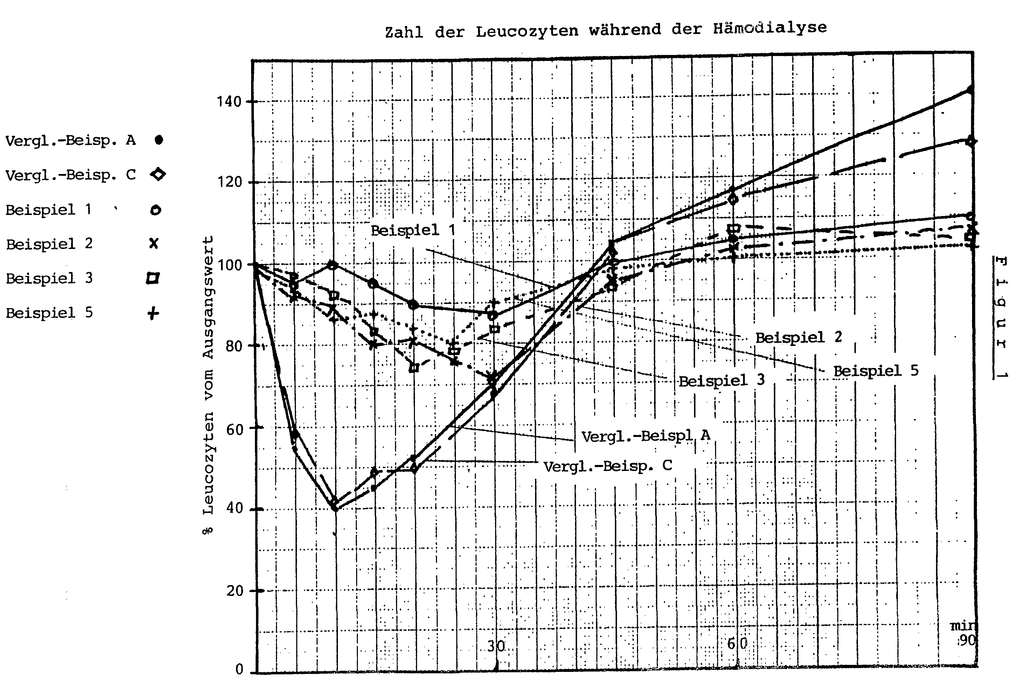

Mit Hilfe eines Hämodialysators, der Hohlfäden aus Cellulose, die aus Cuoxamlösungen regeneriert worden war, enthielt und dessen Membranoberfläche 500 cm² betrug, wurde an Kaninchen eine Hämodialyse durchgeführt. Nach bestimmten Zeitabschnitten wurde von dem den Dialysator verlassenden Blut eine Probe entnommen und in dieser die Zahl der Leukozyten gezählt. Die dabei erhaltenen Werte wurden auf die ursprüngliche Zahl der Leukozyten des Kaninchens bezogen und sind in der Fig. 1 im Vergleich zu den Beispielen 1, 2, 3 und 5 dargestellt.

Vergleichsbeispiel B:

Mit Dialysatorzellen, die Hohlfäden entsprechend Vergleichsbeispiel A, jedoch mit einer Membranoberfläche von 50 cm² enthielten, wurde die Komplementaktivierung direkt am Menschen im ex-vivo-System untersucht. Dazu wurde die Bestimmung der Fragmente C3a und C5a mit Hilfe der RIA (Radioimmunoassay)methode (Upjohn Test) herangezogen.

Ermittelt wurden: C3a = 15300 ng/ml
C5a = 124 ng/ml

Vergleichsbeispiel C:

Es wurde in gleicher Weise, wie beim Vergleichsbeispiel A beschrieben ist, eine Hämodialyse an Kaninchen mit einem Hämodialysator mit 500 cm² Membranoberfläche durchgeführt, der jedoch Hohlfäden aus Cellulose, die durch Verseifung von Celluloseacetat regeneriert worden war, Type SCE enthielt.

Die erhaltenen Werte sind in Fig. 1 graphisch dargestellt.

Beispiel 1:

Mit einer 10 Vol.-%igen Lösung eines Isocyanatpräpolymeren, das aus 100 g Rizinusöl und 71,4 g 4,4'-Diphenylmethan-diisocyanat gebildet worden war, in Methylenchlorid wurden Hohlfäden aus Cellulose, die aus Cuoxamlösungen regeneriert worden war, 10 min. behandelt.

Anschliessend wurden die Fäden mit reinem Methylenchlorid nachgewaschen und das restliche Lösungsmittel ausgeblasen. Die danach getrockneten Hohlfäden wurden zur Bestimmung der UFR und der Dialysierleistung für Kreatinin herangezogen. Die erhaltenen Werte sind nachfolgend für die erhaltene Membran und eine unbehandelte Membran gegenübergestellt.

|  | gemäss Beispiel 1 behandelt | unbehandelte Hohlfäden |
|---|---|---|
| $^{UFR}[m \cdot h^{-1} \cdot Pa^{-1}] \cdot 10^8$ | 2,55 (3,4 ml/m² · h · mm Hg) | 3,68 (4,9 ml/m² · h · mm Hg) |
| $^{DL}$Kreatinin [cm/min] | $33 \cdot 10^{-3}$ | $45 \cdot 10^{-3}$ |

Die Untersuchung der Leukopenie an Kaninchen ergab das in Fig. 1 dargestellte Ergebnis, d.h. der Abfall der Leukozytenzahl ist im Vergleich zu unbehandelten Hohlfäden viel geringer. Die Versuche wurden mit Dialysatoren einer Membranoberfläche von 500 cm² durchgeführt.

Beispiel 2:

Analog zu Beispiel 1 wurden Dialysehohlfäden aus Cellulose, die aus Cuoxamlösungen regeneriert worden war, mit einer 5 Vol.-%igen Lösung eines Isocyanatpräpolymeren, das aus 383 g Polyäthylenglykol mit einem mittleren Molekulargewicht von 2000 und 100 g 4,4'-Dicyclohexylmethan-diisocyanat gebildet worden war, im Dimethylformamid unter Zusatz von 0,1 Gew.-%, bezogen auf das Präpolymer, Eisen-III-acetylacetonat 15 min. bei Raumtemperatur behandelt. Die Lösungsreste wurden zunächst mit Dimethylformamid und anschliessend mit Methylenchlorid ausgewaschen. Nach dem Ausblasen des Methylenchlorids wurden die Fäden getrocknet.

Sowohl die UFR als auch die dialytische Permeabilität ergaben die gleichen Werte, wie sie mit unbehandelten Hohlfäden erhalten wurden, nämlich: $UFR = 3,68 \cdot 10^{-8}[m \cdot h^{-1} \cdot Pa^{-1}]$ (4,9 ml/m² · h · mm Hg)

$$DL_{Kreat.} = 45 \cdot 10^{-3} \, cm/min$$

Das Ergebnis der Zählung der Leukozyten in Abhängigkeit von der Dialysezeit bei Kaninchen, mit einem Dialysator mit 500 cm² Membranoberfläche, ist in Fig. 1 dargestellt.

Beispiel 3:

Analog zu den vorhergehenden Beispielen wurden wiederum die gleichartigen Dialysehohlfäden mit einer 1 Vol.-%igen Lösung des in Beispiel 1 beschriebenen Isocyanatpräpolymer in Aceton 3 Stunden behandelt. Nach dem Auswaschen der Hohlfäden mit Aceton wurden die Hohlfäden getrocknet.

Auch hier wurden wiederum gegenüber unbehandelten Hohlfäden unveränderte Werte der UFR und der dialytischen Permeabilität von Kreatinin festgestellt. Das Ergebnis der Zählung der Leukozyten, bei der Dialyse von Kaninchen mit einem Dialysator mit 500 cm² Membranoberfläche, ist ebenfalls in Fig. 1 dargestellt.

Beispiel 4:

Es wurde eine 10 Vol.-%ige Lösung in Methylenchlorid eines aus 100 g Rizinusöl und 74,6 Dicyclohexyl-methan-diisocyanat gebildeten Isocyanatpräpolymeren mit 0,1 Gew.-% Eisen-III-acetylacetonat, bezogen auf das Isocyanatpräpolymer, zur Behandlung von Cellulosehohlfäden, die aus Cuoxamlösungen regeneriert waren, eingesetzt. Die Behandlungszeit betrug 20 min.

Neben der Bestimmung der Leukozytenzahl bei der Dialyse von Kaninchen mit einem Dialysator von 500 cm² Membranoberfläche und der Bestimmung der UFR und dialytischen Permeabilität von Kreatinin wurden die Komplementaktivierung durch Bestimmung der Fragmentkomponenten C3a und C5a an Blutproben ermittelt, die analog zu Vergleichsbeispiel B am Menschen im ex-vivo-System mit Zellen von 50 cm² Membranoberfläche erhalten worden waren. Dabei wurde festgestellt, dass der Wert für C3a nur 3700 ng/ml und für C5a 11 ng/ml betrug.

Die Dialyseleistungen gegenüber unbehandelten Cellulosehohlfäden blieben unverändert.

Beispiel 5:

Als Isocyanatpräpolymer diente ein solches, das aus 120 g Polyäthylenglykol mit einem Molekulargewicht von 6000 und 10 g 4,4'-Diphenylmethan-diisocyanat gebildet worden war. Es wurde als 15 Vol.-%ige Lösung in Dimethylacetamid verwendet.

Behandelt wurden Hohlfäden aus regenerierter Cellulose vom Typ SCE mit einem Lumendurchmesser von 168 µm und einer Wandstärke von 17 µm. Die Cellulose war durch Verseifen von Celluloseacetat regeneriert worden. Nach einer Behandlungsdauer von 45 min. wurde die Restlösung mit Dimethylacetamid ausgewaschen und anschliessend mit Methylenchlorid nachgewaschen. Die getrockneten Hohlfäden wurden auf ihre Leistungsdaten und die Leukozytenzahl bei der Dialyse von Kaninchen mit einem Dialysator von 500 cm² Membranoberfläche bestimmt. Der Leukozytenabfall ist in Fig. 1 im Vergleich zu den anderen Beispielen, dem Vergleichsbeispiel A und einer Vergleichsmessung mit unbehandelten Hohlfäden der bei diesem Beispiel verwendeten Type SCE (Vergleichsbeispiel C) dargestellt.

Für die UFR wurde ermittelt:

$$UFR = 1,5 \cdot 10^{-8} [m \cdot h^{-1} \cdot Pa^{-1}]$$
$$(2,0 \text{ ml/m}^2 \cdot h \cdot mm \text{ Hg})$$

Bei unbehandelten Hohlfäden betrug sie 2,9 ml/h · m² · mm Hg. Für die dialytische Permeabilität von Kreatinin wurde $30 \cdot 10^{-3}$ cm/min ermittelt, gegenüber $45 \cdot 10^{-3}$ cm/min bei unbehandelten Hohlfäden.

Beispiel 6:

Das in diesem Beispiel verwendete Isocyanatpräpolymer war ein in einer zweistufigen Reaktion erhaltenes Reaktionsprodukt. In einer ersten Stufe wurden 50,4 g 4,4'-Dicyclohexylmethan-diisocyanat mit 95,2 g Rizinusöl umgesetzt. In der zweiten Stufe wurde das erhaltene Zwischenprodukt mit 5,8 g Hexamethylendiamin umgesetzt. Dieses Reaktionsprodukt wurde dann als 10%ige Lösung in Dimethylacetamid verwendet.

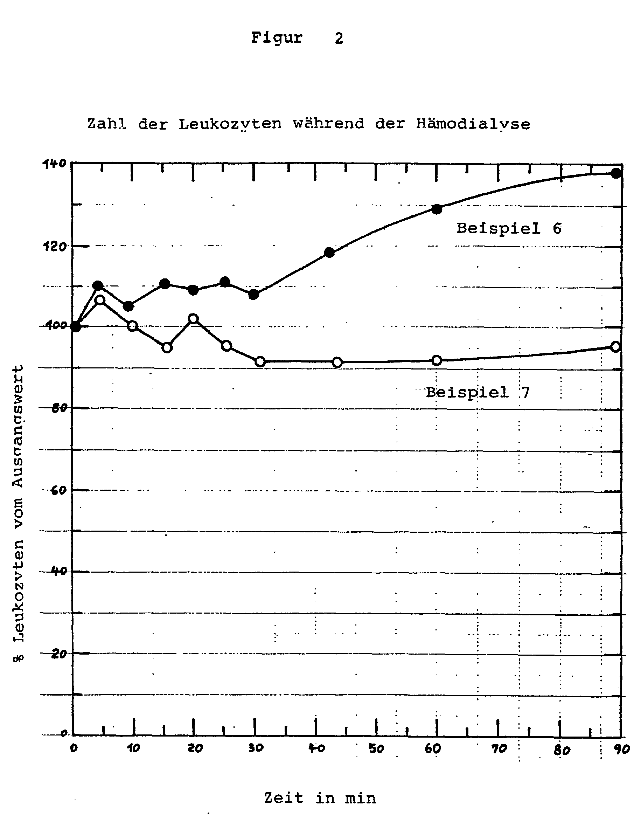

Behandelt wurden Hohlfäden aus Cellulose, die aus Cuoxamlösungen regeneriert waren. Die Behandlungszeit betrug 1 Stunde. Die Behandlung wurde bei 50 °C durchgeführt. Anschliessend wurden die Hohlfäden mit reinem Dimethylacetamid ausgewaschen, das Dimethylacetamid mit Aceton entfernt und die Hohlfäden getrocknet. Die Untersuchung der Leukopenie ergab das in Fig. 2 dargestellte Verhalten.

Beispiel 7:

In diesem Beispiel wurde ein Isocyanatpräpolymer verwendet, das ebenfalls in Stufen hergestellt worden ist. In der ersten Stufe werden 50 g 4,4'-Diphenylmethandiisocyanat und 60 g Polyäthylenglykol mit einem mittleren Molekulargewicht von 600 umgesetzt. In der zweiten Stufe wird das Zwischenprodukt mit 1,6 g Hydrazin umgesetzt.

Mit einer 5%igen Lösung dieses Isocyanatpräpolymeren in Dimethylacetamid wurden Cellulosehohlfasern behandelt, wobei die Cellulose aus Cuoxamlösungen regeneriert worden war. Die Behandlung erfolgte bei Raumtemperatur und wurde über einen Zeitraum von 10 Minuten durchgeführt. Die Hohlfasern wurden anschliessend zunächst mit reinem Dimethylacetamid und dann mit Aceton gewaschen und getrocknet.

Das Verhalten der Leukozyten am Kaninchen ist in der Fig. 2 graphisch dargestellt.

**Patentansprüche**

1. Dialysemembran in Form von Flachfolien, Schlauchfolien oder Hohlfäden aus regenerierter Cellulose, dadurch gekennzeichnet, dass mindestens an einer Membranoberfläche in organischen Lösungsmitteln lösliche, ausgenommen mit Isocyanat-Gruppen reagierende und Cellulose lösende Lösungsmittel, solche Isocyanatpräpolymere mit einem mittleren Molekulargewicht von 300 bis 50.000 chemisch gebunden sind, die Reaktionsprodukte aus einer Hydroxy- und/oder Polyhydroxy-Verbindung und einer polyfunktionellen Isocyanat-Verbindung sind.

2. Dialysemembran nach Anspruch 1, dadurch gekennzeichnet, dass das Isocyanatpräpolymer ein Reaktionsprodukt eines Diisocyanates mit einem Fettalkohol mit 6 bis 30 C-Atomen ist.

3. Dialysemembran nach Anspruch 1, dadurch gekennzeichnet, dass das Isocyanatpräpolymer ein Reaktionsprodukt eines Diisocyanates mit einem äthoxilierten Fettalkohol mit 6 bis 30 C-Atomen ist.

4. Dialysemembran nach Anspruch 1, dadurch gekennzeichnet, dass das Isocyanatpräpolymer ein Reaktionsprodukt eines Diisocyanates mit einer äthoxilierten Fettsäure mit 6 bis 30 C-Atomen ist.

5. Dialysemembran nach Anspruch 3 oder 4, dadurch gekennzeichnet, dass der Äthoxilierungsgrad 5 bis 400 beträgt.

6. Dialysemembran nach Anspruch 1, dadurch gekennzeichnet, dass das Isocyanatpräpolymer ein Reaktionsprodukt eines Diisocyanates mit Polyhydroxy-Verbindungen ist.

7. Dialysemembran nach Anspruch 6, dadurch gekennzeichnet, dass als Polyhydroxy-Verbindungen Dioxy- und/oder Trioxy-Verbindungen eingesetzt werden.

8. Dialysemembran nach einem oder mehreren der Ansprüche 1 bis 7, dadurch gekennzeichnet, dass das Isocyanatpräpolymere ein Reaktionsprodukt ist aus einer zunächst durchgeführten Reaktion einer Hydroxy- und/oder Polyhydroxy-Verbindung mit einer polyfunktionellen Isocyanat-Verbindung und einer anschliessend durchgeführten Reaktion dieses Zwischenproduktes mit Hydrazin und/oder einem aliphatischen Diamin einer Kettenlänge von 2 bis 30 C-Atomen.

9. Dialysemembran nach einem oder mehreren der Ansprüche 1 bis 8, dadurch gekennzeichnet, dass die Cellulose eine aus Cuoxamlösungen regenerierte Cellulose ist.

10. Dialysemembran nach Anspruch 9, dadurch gekennzeichnet, dass das mittlere Molekulargewicht der regenerierten Cellulose 80.000 bis 150.000 beträgt.

11. Verfahren zur Herstellung der Dialysemembran nach den Ansprüchen 1 bis 10, dadurch gekennzeichnet, dass man eine Dialysemembran in Form von Hohlfäden, Schlauchfolien oder Flachfolien aus regenerierter Cellulose mit einer Lösung eines Isocyanatpräpolymeren bei Temperaturen oberhalb 10 °C in einem organischen Lösungsmittel, welches mit dem gewählten Präpolymeren nicht reagiert und Cellulose nicht löst, und unterhalb der Siedetemperatur des Lösungsmittels zwischen 3 Minuten und 24 Stunden behandelt, den Überschuss an Präpolymer mit reinem Lösungsmittel auswäscht und das Lösungsmittel entfernt.

12. Verfahren nach Anspruch 11, dadurch gekennzeichnet, dass die Lösung des Isocyanatpräpolymeren einen Katalysator für die Additionsreaktion des Präpolymeren an Cellulose enthält.

13. Verfahren nach Anspruch 12, dadurch gekennzeichnet, dass der Katalysator Eisen-III-acetylacetonat ist.

14. Verfahren nach einem oder mehreren der Ansprüche 11 bis 13, dadurch gekennzeichnet, dass die Konzentration des Isocyanatpräpolymeren im Lösungsmittel von 0,1 bis 20 Volumen% beträgt.

15. Verfahren nach Anspruch 14, dadurch gekennzeichnet, dass die Konzentration des Isocyanatpräpolymeren im Lösungsmittel von 1,0 bis 10,0 Volumen% beträgt.

16. Verfahren nach einem oder mehreren der Ansprüche 11 bis 15, dadurch gekennzeichnet, dass die Behandlungszeit der Membran zwischen 5 Minuten und 3 Stunden liegt.

17. Verfahren nach einem oder mehreren der Ansprüche 11 bis 16, dadurch gekennzeichnet, dass das Lösungsmittel dadurch entfernt wird, dass man mit einem leichter flüchtigen, Cellulose nicht lösendem, organischen Lösungsmittel das Lösungsmittel auswäscht und den verbleibenden Lösungsmittelrest verdampfen lässt.

**Claims**

1. A dialysis membrane in the form of flat films, tubular films or hollow filaments of regenerated cellulose, characterized in that isocyanate prepolymers which are soluble in organic solvents, except for isocyanate-reactive reactive and cellulose-dissolving solvents, which have an average molecular weight of from 300 to 50,000 and which are formed by reaction products of a hydroxy and/or polyhydroxy compound and a polyfunctional isocyanate compound are chemically bound to at least one surface of the membrane.

2. A dialysis membrane as claimed in claim 1, characterized in that the isocyanate prepolymer is a reaction product of a diisocyanate with a $C_6$–$C_{30}$ fatty alcohol.

3. A dialysis membrane as claimed in claim 1, characterized in that the isocyanate prepolymer is a reaction product of a diisocyanate with an ethoxylated $C_6$–$C_{30}$ fatty alcohol.

4. A dialysis membrane as claimed in claim 1, characterized in that the isocyanate prepolymer is a reaction product of a diisocyanate with an ethoxylated $C_6$–$C_{30}$ fatty acid.

5. A dialysis membrane as claimed in claim 3 or 4, characterized in that the degree of ethoxylation is 5 to 400.

6. A dialysis membrane as claimed in claim 1, characterized in that the isocyanate prepolymer is a reaction product of a diisocyanate with polyhydroxy compounds.

7. A dialysis membrane as claimed in claim 6, characterized in that dihydroxy and/or trihydroxy compounds are used as the polyhydroxy compounds.

8. A dialysis membrane as claimed in one or more of claims 1 to 7, characterized in that the isocyanate prepolymer is a reaction product of an initial reaction of a hydroxy and/or polyhydroxy compound with a polyfunctional isocyanate compound and a subsequent reaction of this intermediate product with hydrazine and/or an aliphatic diamine containing 2 to 30 carbon atoms.

9. A dialysis membrane as claimed in one or more of claims 1 to 8, characterized in that the cellulose is a cellulose regenerated from cuprammonium solutions.

10. A dialysis membrane as claimed in claim 9, characterized in that the average molecular weight of the regenerated cellulose is from 80,000 to 180,000.

11. A process for the production of the dialysis membrane claimed in claims 1 to 10, characterized in that a dialysis membrane in the form of hollow filaments, tubular films or flat films of regenerated cellulose is treated for 3 minutes to 24 hours with a solution of an isocyanate prepolymer in an organic solvent which does not react with the selected prepolymer and does not dissolve cellulose at temperatures above 10 °C and below the boiling point of the solvent, the excess prepolymer is washed out with pure solvent and the solvent is removed.

12. A process as claimed in claim 11, characterized in that the solution of the isocyanate prepolymer contains a catalyst for the addition reaction of the prepolymer onto cellulose.

13. A process as claimed in claim 12, characterized in that the catalyst is iron(III) acetyl acetonate.

14. A process as claimed in one or more of claims 11 to 13, characterized in that the concentration of the isocyanate prepolymer in the solvent is from 0.1 to 20% by volume.

15. A process as claimed in claim 14, characterized in that the concentration of the isocyanate prepolymer in the solvent is from 1.0 to 10% by volume.

16. A process as claimed in one or more of claims 11 to 15, characterized in that the treatment time of the membrane is between 5 minutes and 3 hours.

17. A process as claimed in one or more of claims 11 to 16, characterized in that the solvent is removed by washing out with a more volatile organic solvent which does not dissolve cellulose and evaporating the remaining solvent.

## Revendications

1. Membrane de dialyse, sous forme de films plats, de films tubulaires ou de fibres creuses en cellulose régénérée, caractérisée en ce que des prépolymères d'isocyanate ayant une masse moléculaire moyenne de 300 à 50 000, qui sont les produits de la réaction d'un composé hydroxylé et/ou polyhydroxylé et d'un composé isocyanate polyfonctionnel, et qui sont solubles dans les solvants organiques, à l'exception des solvants réagissant sur les groupes isocyanate et dissolvant la cellulose, sont chimiquement liés à au moins une surface de la membrane.

2. Membrane de dialyse selon la revendication 1, caractérisée en ce que le prépolymère d'isocyanate est un produit de la réaction d'un diisocyanate sur un alcool gras ayant de 6 à 30 atomes de carbone.

3. Membrane de dialyse selon la revendication 1, caractérisée en ce que le prépolymère d'isocyanate est un produit de la réaction d'un diisocyanate sur un alcool gras éthoxylé ayant de 6 à 30 atomes de carbone.

4. Membrane de dialyse selon la revendication 1, caractérisée en ce que le prépolymère d'isocyanate est un produit de la réaction d'un diisocyanate sur un acide gras éthoxylé ayant de 6 à 30 atomes de carbone.

5. Membrane de dialyse selon la revendication 3 ou 4, caractérisée en ce que le degré d'éthoxylation est de 5 à 400.

6. Membrane de dialyse selon la revendication 1, caractérisée en ce que le prépolymère d'isocyanate est un produit de la réaction d'un diisocyanate sur des composés polyhydroxylés.

7. Membrane de dialyse selon la revendication 6, caractérisée en ce qu'on utilise comme composés polyhydroxylés des composés dioxy et/ou trioxy.

8. Membrane de dialyse selon une ou plusieurs des revendications 1 à 7, caractérisée en ce que le prépolymère d'isocyanate est un produit d'une réaction, réalisée en premier, d'un composé hydroxylé et/ou polyhydroxylé sur un composé isocyanate polyfonctionnel, et d'une réaction, réalisée ensuite, de ce produit intermédiaire sur l'hydrazine et/ou une diamine aliphatique ayant une longueur de chaîne de 2 à 30 atomes de carbone.

9. Membrane de dialyse selon une ou plusieurs des revendications 1 à 8, caractérisée en ce que la cellulose est une cellule régénérée à partir de solutions de Cuoxam.

10. Membrane de dialyse selon la revendication 9, caractérisée en ce que la masse moléculaire moyenne de la cellulose régénérée est de 80 000 à 150 000.

11. Procédé pour la préparation de la mebrane de dialyse selon les revendications 1 à 10, caractérisé en ce qu'on traite, pendant trois minutes à 24 heures, une membrane de dialyse sous forme de fibres creuses, de films plats ou de films tubulaires en cellulose régénérée, avec une solution d'un prépolymère d'isocyanate, à des températures supérieures à 10 °C dans un solvant organique qui ne réagit par sur le prépolymère choisi et qui ne dissout pas la cellulose, et en-dessous de la température d'ébullition du solvant, on élimine l'excès de prépolymère par lavage avec du solvant pur, et on élimine le solvant.

12. Procédé selon la revendication 11, caractérisé en ce que la solution du prépolymère d'isocyanate contient un catalyseur de la réaction d'addition du prépolymère sur la cellulose.

13. Procédé selon la revendication 12, caractérisé en ce que le catalyseur est l'acétylacétonate de fer-(III).

14. Procédé selon une ou plusieurs des revendications 11 à 13, caractérisé en ce que la concentration du prépolymère d'isocyanate dans le solvant est de 0,1 à 20% en volume.

15. Procédé selon la revendication 14, caractérisé en ce que la concentration du prépolymère d'isocyanate dans le solvant est de 1,0 à 10,0% en volume.

16. Procédé selon une ou plusieurs des revendications 11 à 15, caractérisé en ce que le temps de traitement de la membrane est compris entre 5 minutes et 3 heures.

17. Procédé selon une ou plusieurs des revendications 11 à 16, caractérisé en ce que l'on élimine le solvant par lavage à l'aide d'un solvant organique plus facilement volatil, ne dissolvant pas la cellulose, et qu'on évapore le solvant résiduel restant.

## Zahl der Leucozyten während der Hämodialyse

Vergl.-Beisp. A ●

Vergl.-Beisp. C ◇

Beispiel 1 ○

Beispiel 2 ✕

Beispiel 3 □

Beispiel 5 ✛

EP 0 155 534 B1

Figur 1

Figur   2

Zahl der Leukozyten während der Hämodialyse

Beispiel 6

Beispiel 7

% Leukozyten vom Ausgangswert

Zeit in min

11